# EUROPÄISCHE PATENTSCHRIFT

(11) **EP 2 702 296 B1**
(45) Veröffentlichungstag und Bekanntmachung des Hinweises auf die Patenterteilung: **10.02.2016**
(21) Anmeldenummer: 12713024.3
(22) Anmeldetag: 27.03.2012
(51) Int. Cl.: F16F 15/14, F16H 45/02

(54) **DREHMOMENTÜBERTRAGUNGSANORDNUNG**
TORQUE TRANSMISSION ARRANGEMENT
ENSEMBLE DE TRANSMISSION DE COUPLE DE ROTATION

(30) Priorität: 28.04.2011 DE 102011017660
(43) Veröffentlichungstag der Anmeldung: 05.03.2014
(73) Patentinhaber: ZF Friedrichshafen AG, 88038 Friedrichshafen (DE)
(72) Erfinder: SASSE, Christoph, 97422 Schweinfurt (DE)
(86) Internationale Anmeldenummer: PCT/EP2012/055376
(87) Internationale Veröffentlichungsnummer: WO 2012/146451

(56) Entgegenhaltungen:
- DE-A1- 10 005 547
- DE-A1- 19 804 227
- DE-A1-102008 057 647
- DE-A1-102008 057 648
- DE-A1-102009 012 485
- DE-A1-102009 042 837
- DE-A1-102010 014 674

## Beschreibung

Die vorliegende Erfindung betrifft eine Drehmomentübertragungsanordnung für den Antriebsstrang eines Fahrzeugs, umfassend einen mit einem Antriebsorgan, insbesondere Antriebswelle, zur Drehung um eine Drehachse zu koppelnden Antriebsbereich, einen über eine Dämpferelementenanordnung mit dem Antriebsbereich gekoppelten oder koppelbaren und im Kopplungszustand gegen die Rückstellwirkung der Dämpferelementenanordnung um die Drehachse bezüglich des Antriebsbereichs drehbaren Abtriebsbereich sowie wenigstens eine Feder-Masse-Pendeleinheit mit einer Federanordnung und einer gegen die Rückstellwirkung der Federanordnung auslenkbaren Masseanordnung und wenigstens eine Fliehkraft-Masse-Pendeleinheit mit einem um die Drehachse drehbaren Auslenkungsmassenträger und wenigstens einer am Auslenkungsmassenträger bezüglich diesem verlagerbar getragene Auslenkungsmasse, wobei bei Auslenkung der wenigstens einen Auslenkungsmasse aus einer Grund-Relativlage bezüglich des Auslenkungsmassenträgers eine Radiallage der wenigstens einen Auslenkungsmasse bezüglich der Drehachse sich verändert, wobei wenigstens eine Feder-Masse-Pendeleinheit ein Zentralscheibenelement und an wenigstens einer Seite davon ein Deckscheibenelement, vorzugsweise beidseits davon miteinander verbundene Deckscheibenelemente umfasst, wobei das wenigstens eine Deckscheibenelement gegen die Wirkung einer Federanordnung bezüglich des Zentralscheibenelements drehbar ist und wobei die wenigstens eine Feder-Masse-Pendeleinheit an eine Baugruppe von Zentralscheibenelement und Deckscheibenelement, vorzugsweise Zentralscheibenelement, angekoppelt ist und an einer anderen Baugruppe von Deckscheibenelement und Zentralscheibenelement, vorzugsweise Deckscheibenelement, wenigstens ein Teil der Masseanordnung gelagert ist, wobei bei wenigstens einer Fliehkraft-Masse-Pendeleinheit der Auslenkungsmassenträger ein Trägerscheibenelement umfasst.

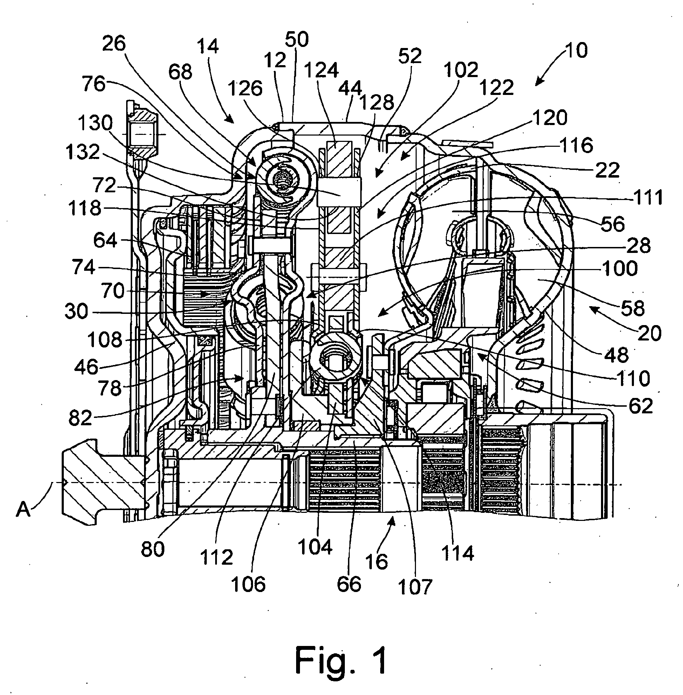

Die DE 198 04 227 A1 zeigt eine Überbrückungskupplung mit einer Ausgleichsschwungmasse am Torsionsschwingungsdämpfer. Gemäß Figur 1 umfasst die Vorrichtung eine Fliehkraft-Masse-Pendeleinheit mit einer Auslenkungsmasse, die von einem Auslenkungsmassenträger gehalten wird. Des Weiteren sind antriebsseitige Übertragungselemente umfassend Federn sowie einen Turbinenrad vorgesehen. Je nachdem, ob die Überbrückungskupplung der Vorrichtung geschlossen ist, kann die Federanordnung bzw. das Turbinenrad als Feder-Masse-Pendeleinheit wirken.

Die DE 100 05 547 A1 offenbart eine Schwingungsdämpfungseinrichtung. Die Vorrichtung umfasst eine Fliehkraft-Masse-Pendeleinheit mit einem Auslenkungsmassenträger. Eine Feder-Masse-Pendeleinheit ist nicht gezeigt.

In der DE 10 2008 057 647 A1 offenbart eine Kraftübertragungsvorrichtung. Die Kraftübertragungsvorrichtung umfasst eine Trägheitsmasseneinrichtung bzw. einen drehzahladaptiven Tilger. Der drehzahladaptive Tilger ist an der als Primärseite dienenden Mitnehmerscheibe des zweiten Torsionsschwingungsdämpfers angeordnet. Bei geöffneter Kupplung wirkt der erste Torsionsschwingungsdämpfer als Feder-Masse-Pendeleinheit, wobei die Primärseite des ersten Torsionsschwingungsdämpfers als Masseanordnung agiert. Bei geschlossener Kupplung übertragen die Torsionsschwingungsdämpfer Drehmoment und wirken nicht als Feder-Masse-Pendeleinheit.

Die DE 10 2009 012 485 A1 zeigt einen Antriebsstrang für ein Fahrzeug sowie einen Torsionsdämpfer. Dabei ist eine Fliehkraft-Pendeleinrichtung an der Sekundärseite oder an der Primärseite eines Torsionsschwingungsdämpfers angeordnet.

Aus der US 2010/0269497 A1 ist ein hydrodynamischer Drehmomentwandler vorbekannt. Der Drehmomentwandler weist ein Fliehkraftpendel auf, das an der Primärseite und/oder an der Sekundärseite eines Torsionsschwingungsdämpfers angeordnet ist.

Aus der DE 10 2008 057 648 A1 ist eine in Form eines hydrodynamischen Drehmomentwandlers ausgebildete Drehmomentübertragungsanordnung bekannt. Ein im Wesentlichen einen Antriebsbereich dieser Drehmomentübertragungsanordnung bereitstellendes Gehäuse kann über eine Überbrückungskupplung und eine Torsionsschwingurigsdämpferanordnung mit einem Abtriebsbereich, bereitgestellt durch eine Abtriebsnabe, zur direkten Drehmomentübertragung gekoppelt werden. Die Torsionsschwingungsdämpferanordnung umfasst zwei seriell wirksame Torsionsschwingungsdämpfer, wobei eine Primärseite eines ersten dieser Torsionsschwingungsdämpfer an den Ausgangsbereich der Überbrückungskupplung angekoppelt ist eine Sekundärseite des zweiten der beiden Torsionsschwingungsdämpfer an die Abtriebsnabe angekoppelt ist, eine Sekundärseite des ersten Torsionsschwingungsdämpfers und eine Primärseite des zweiten Torsionsschwingungsdämpfers einer Zwischenmassenanordnung bilden und das Turbinenrad an die Zwischenmassenanordnung angekoppelt ist. Im Einrückzustand der Überbrückungskupplung trägt somit das Turbinenrad zur Erhöhung der trägen Masse der Zwischenmassenanordnung bei. Im ausgerückten Zustand der Überbrückungskupplung wird ein Drehmoment über das Turbinenrad und den zweiten Torsionsschwingungsdämpfer auf die Abtriebsnabe, also zum Abtriebsbereich übertragen. Der erste Torsionsschwingungsdämpfer bildet mit seinen Dämpferfedern und seiner Primärseite bzw. dem damit gekoppelten Ausgangsbereich der Überbrückungskupplung bei ausgerückter Überbrückungskupplung eine Feder-Masse-Pendelanordnung, da die Primärseite und der damit gekoppelte Ausgangsbereich der Überbrückungskupplung gegen die Rückstellwirkung der Dämpferfedern dieses Torsionsschwingungsdämpfers im Wesentlichen frei schwingen können.

Mit der Zwischenmassenanordnung und damit auch dem Turbinenrad ist eine Fliehkraft-Masse-Pendeleinheit gekoppelt, die an einem Auslenkungsmassenträger eine Mehrzahl von aus einer Grund-Relativlage bezüglich diesem auslenkbaren Auslenkungsmassen umfasst. Bei Auslenkung aus der Grund-Relativlage bewegen sich die Auslenkungsmassen nach radial innen und nehmen dabei potentielle Energie im Fliehpotential auf. Diese Fliehkraft-Masse-Pendeleinheit ist axial neben dem ersten Torsionsschwingungsdämpfer positioniert, welcher bei ausgrückter Überbrückungskupplung als Feder-Masse-Pendeleinheit, also als Festfrequenztilger, wirksam sein kann.

Während der im ausgerückten Zustand der Überbrückungskupplung als Feder-Masse-Pendeleinheit wirksame erste Torsionsschwingungsdämpfer als so genannter Festfrequenztilger wirksam ist, also aufgrund der Ausgestaltung seiner Dämpferfedern einerseits und der Masse seiner Primärseite und des Ausgangsbereichs der Überbrückungskupplung auf eine im Wesentlichen unveränderbare Anregungsfrequenz abgestimmt ist, ist die Fliehkraft-Masse-Pendeleinheit als so genannter drehzahladaptiver Tilger wirksam, welcher auf eine Anregungsordnung, beispielsweise die Zündfrequenz einer Brennkraftmaschine, abgestimmt ist, seine primäre Dämpfungscharakteristik jedoch mit der Änderung dieser Anregungsfrequenz, mithin also auch der Änderung der Drehzahl einer Brennkraftmaschine, verschiebt.

Bei diesem bekannten System können bei ausgerückter Überbrückungskupplung also beide Dämpfungs- bzw. Tilgungsmechanismen des Festfrequenztilgers einerseits und des drehzahladaptiven Tilgers andererseits wirksam sein, während bei eingerückter Überbrückungskupplung der erste Torsionsschwingungsdämpfer in den Drehmomentübertragungsweg zwischen dem Antriebsbereich und dem Abtriebsbereich eingeschaltet ist und somit seine Dämpfungsfunktionalität im Rahmen der Torsionsschwingungsdämpferanordnung erfüllt, jedoch nicht mehr als Festfrequenztilger wirksam sein kann.

Die DE 10 2009 042 837 A1 offenbart eine in Form eines hydrodynamischen Drehmomentwandlers ausgebildete Drehmomentübertragungsanordnung, bei welcher das Turbinenrad über eine Federanordnung an die Zwischenmassenanordnung einer Torsionsschwingungsdämpferanordnung mit zwei seriell wirksamen Torsionsschwingungsdämpfern angekoppelt ist. Zusammen mit dem Turbinenrad ist eine Fliehkraft-Masse-Pendeleinheit, also ein drehzahladaptiver Tilger, über diese Federn an die Zwischenmassenanordnung angekoppelt.

Bei eingerückter Überbrückungskupplung und Drehmomentübertragung vom Antriebsbereich über die Überbrückungskupplung und die beiden seriell wirksamen Torsionsschwingungsdämpfer der Torsionsschwingungsdämpferanordnung zur Abtriebsnabe, also zum Abtriebsbereich, ist das Turbinenrad nicht in den Drehmomentübertragungsweg eingeschaltet und erfüllt damit im Wesentlichen die Funktion eines Teils einer Masseanordnung einer Feder-Masse-Pendeleinheit. Einen weiteren Teil dieser Masseanordnung bildet die Fliehkraft-Masse-Pendeleinheit.

Bei ausgerückter Überbrückungskupplung und Drehmomentübertragung über das Turbinenrad kann dieses in Verbindung mit den es an die Zwischenmassenanordnung ankoppelnden Federn nicht mehr die Funktionalität einer Feder-Masse-Pendeleinheit erfüllen. In diesem Zustand kann jedoch der unmittelbar auf die Überbrückungskupplung folgende Torsionsschwingungsdämpfer mit seinen Dämpferfedern, seiner Primärseite und dem daran angekoppelten Ausgangsbereich der Überbrückungskupplung die Funktionalität einer Feder-Masse-Pendeleinheit erfüllen. Dies bedeutet, dass jede der beiden hier als Feder-Masse-Pendeleinheit grundsätzlich wirksamen Baugruppen in einem der beiden möglichen Schaltzustände der Überbrückungskupplung, also im Einrückzustand oder im Ausrückzustand, diese Funktionalität nicht mehr erfüllen kann, da sie dann in den Drehmomentübertragungsweg eingeschaltet ist.

Auch bei diesem Aufbau liegen die Fliehkraft-Masse-Pendeleinheit und die als Feder-Masse-Pendeleinheiten wirksamen Baugruppen im Wesentlichen axial gestaffelt zueinander, wobei insbesondere die Auslenkungsmassen der Feder-Masse-Pendeleinheit näherungsweise auf gleichem radialen Niveau liegen, wie die Federanordnungen der als Feder-Masse-Pendeleinheiten wirksamen Baugruppen.

Es ist die Aufgabe der vorliegenden Erfindung, eine Drehmomentübertragungsanordnung für den Antriebsstrang eines Fahrzeugs vorzusehen, die eine kompakte Ausgestaltung ermöglicht.

Erfindungsgemäß wird diese Aufgabe gelöst durch eine Drehmomentübertragungsanordnung für den Antriebsstrang eines Fahrzeugs, umfassend einen mit einem Antriebsorgan, insbesondere Antriebswelle, zur Drehung um eine Drehachse zu koppelnden Antriebsbereich, einen über eine Dämpferelementenanordnung mit dem Antriebsbereich gekoppelten oder koppelbaren und im Kopplungszustand gegen die Rückstellwirkung der Dämpferelementenanordnung um die Drehachse bezüglich des Antriebsbereichs drehbaren Abtriebsbereich sowie wenigstens eine Feder-Masse-Pendeleinheit mit einer Federanordnung und einer gegen die Rückstellwirkung der Federanordnung auslenkbaren Masseanordnung und wenigstens eine Fliehkraft-Masse-Pendeleinheit mit einem um die Drehachse drehbaren Auslenkungsmassenträger und wenigstens einer am Auslenkungsmassenträger bezüglich diesem verlagerbar getragene Auslenkungsmasse, wobei bei Auslenkung der wenigstens einen Auslenkungsmasse aus einer Grund-Relativlage bezüglich des Auslenkungsmassenträgers eine Radiallage der wenigstens einen Auslenkungsmasse bezüglich der Drehachse sich verändert, wobei wenigstens eine Feder-Masse-Pendeleinheit ein Zentralscheibenelement und an wenigstens einer Seite davon ein Deckscheibenelement, vorzugsweise beidseits davon miteinander verbundene Deckscheibenelemente umfasst, wobei das wenigstens eine Deckscheibenelement gegen die Wirkung einer Federanordnung bezüglich des Zentralscheibenelements drehbar ist und wobei die wenigstens eine Feder-Masse-Pendeleinheit an eine Baugruppe von Zentralscheibenelement und Deckscheibenelement, vorzugsweise Zentralscheibenelement, angekoppelt ist und an einer anderen Baugruppe von Deckscheibenelement und Zentralscheibenelement, vorzugsweise Deckscheibenelement, wenigstens ein Teil der Masseanordnung gelagert ist, wobei bei wenigstens einer Fliehkraft-Masse-Pendeleinheit der Auslenkungsmassenträger ein Trägerscheibenelement umfasst, wobei bei wenigstens einer. Feder-Masse-Pendeleinheit und wenigstens einer Fliehkraft-Masse-Pendeleinheit wenigstens ein Trägerscheibenelement ein Deckscheibenelement oder ein Zentralscheibenelement umfasst, so dass wenigstens eine Auslenkungsmasse einer Fliehkraft-Masse-Pendeleinheit und wenigstens eine Masseanördnung oder/und wenigstens eine Federanordnung einer Feder-Masse-Pendeleinheit bezüglich einander radial gestaffelt und sich axial wenigstens teilweise überlappend angeordnet sind.

Bei dem erfindungsgemäßen Aufbau ermöglicht die radiale Staffelung eine sehr kompakte Bauweise.

Der Aufbau der erfindungsgemäßen Drehmomentübertragungsanordnung kann beispielsweise derart sein, dass wenigstens eine Feder-Masse-Pendeleinheit oder/und wenigstens eine Fliehkraft-Masse-Pendeleinheit an den Abtriebsbereich angekoppelt ist, wobei vorzugsweise vorgesehen sein kann, dass mehrere, vorzugsweise alle Feder-Masse-Pendeleinheiten oder/und Fliehkraft-Masse-Pendeleinheiten an den Abtriebsbereich angekoppelt sind.

Um eine weiter optimierte Dämpfungscharakteristik insbesondere unter Ausnutzung der Dämpferelementenanordnung erhalten zu können, wird vorgeschlagen, dass die Dämpferelementenanordnung einen ersten Dämpferelementenbereich, einen zweiten Dämpferelementenbereich und dazwischen eine Zwischenmassenanordnung umfasst.

Dabei kann zur Erhöhung der Masse der Zwischenmassenanordnung vorgesehen sein, dass wenigstens eine Feder-Masse-Pendeleinheit oder/und wenigstens eine Fliehkraft-Masse-Pendeleinheit an die Zwischenmassenanordnung angekoppelt ist, wobei vorzugsweise mehrere, vorzugsweise alle Feder-Masse-Pendeleinheiten oder/und Fliehkraft-Masse-Pendeleinheiten an die Zwischenmassenanordnung angekoppelt sind.

Eine Funktionenverknüpfung insbesondere zur Beeinflussung der Masse der im Wesentlichen frei schwingenden bzw. pendelnden Massen der verschiedenen Pendeleinheiten kann dadurch erreicht werden, dass wenigstens eine Feder-Masse-Pendeleinheit oder/und wenigstens eine Fliehkraft-Masse-Pendeleinheit über wenigstens eine andere Feder-Masse-Pendeleinheit oder/und wenigstens eine andere Fliehkraft-Masse-Pendeleinheit angekoppelt ist.

Der Antriebsbereich kann eine mit Fluid gefüllte oder füllbare Gehäuseanordnung umfassen.

Insbesondere wenn die Drehmomentübertragungsanordnung als Fluidkupplung oder als hydrodynamischer Drehmomentwandler ausgebildet ist, kann mit der Gehäuseanordnung ein Pumpenrad um die Drehachse drehbar sein und in der Gehäuseanordnung ein Turbinenrad angeordnet sein.

Eine weitere Funktionenverschmelzung mit dem Vorteil der Bauraumeinsparung oder auch der Bauteileeinsparung kann dadurch erlangt werden, dass das Turbinenrad wenigstens einen Teil einer Masseanordnung einer Feder-Masse-Pendeleinheit bildet.

Das Turbinenrad kann an den Abtriebsbereich oder, sofern vorhanden, die Zwischenmassenanordnung angekoppelt sein.

Im Drehmomentenfluss zwischen dem Antriebsbereich und dem Abtriebsbereich kann eine Torsionsschwingungsdämpferanordnung mit einem Eingangsbereich und einem Ausgangsbereich und der dazwischen wirkenden Dämpferelementenanordnung vorgesehen sein.

Dabei kann zum Bereitstellen des weiter optimierten Dämpfungsverhaltens vorgesehen sein, dass die Torsionsschwingungsdämpferanordnung einen ersten Torsionsschwingungsdämpfer mit einer den Eingangsbereich bereitstellenden ersten Primärseite und einer gegen die Wirkung des ersten Dämpferelementenbereichs bezüglich der ersten Primärseite drehbaren ersten Sekundärseite sowie einen zweiten Torsionsschwingungsdämpfer mit einer zweiten Primärseite und einer gegen die Wirkung des zweiten Dämpferelementenbereichs bezüglich der zweiten Primärseite drehbaren und den Ausgangsbereich bereitstellenden zweiten Sekundärseite umfasst, wobei die erste Sekundärseite und die zweite Primärseite wenigstens einen Teil der Zwischenmassenanordnung bereitstellen.

Bei einem erfindungsgemäßen Aufbau ist sowohl hinsichtlich der Stabilität als auch hinsichtlich der Bauraumausnutzung vorgesehen, dass wenigstens eine Feder-Masse-Pendeleinheit ein Zentralscheibenelement und an wenigstens einer Seite davon ein Deckscheibenelement, vorzugsweise beidseits davon miteinander verbundene Deckscheibenelemente umfasst, wobei das wenigstens eine Deckscheibenelement gegen die Wirkung einer Federanordnung bezüglich des Zentralscheibenelements drehbar ist und wobei die wenigstens eine Feder-Masse-Pendeleinheit vermittels einer Baugruppe von Zentralscheibenelement und Deckscheibenelement, vorzugsweise Zentralscheibenelement, angekoppelt ist und an der anderen Baugruppe von Deckscheibenelement und Zentralscheibenelement, vorzugsweise Deckscheibenelement, wenigstens ein Teil der Masseanordnung getragen ist.

Die Ausnutzung des Fliehpotentials zur Aufnahme von Energie bzw. zum Aufbau einer Gegenschwingung kann in besonders effizienter Weise dadurch genutzt werden, dass bei wenigstens einer Fliehkraft-Masse-Pendeleinheit an wenigstens einer Auslenkungsmasse oder/und dem Auslenkungsmassenträger in Zuordnung zu wenigstens einer Auslenkungsmasse wenigstens eine gekrümmte Führungsbahn mit einem Scheitelbereich vorgesehen ist, wobei bei Auslenkung der wenigstens einen Auslenkungsmasse aus der Grund-Relativlage ein Führungselement sich ausgehend vom Scheitelbereich entlang der Führungsbahn bewegt.

Erfindungsgemäß ist wenigstens eine Fliehkraft-Masse-Pendeleinheit derart aufgebaut, dass der Auslenkungsmassenträger derselben ein Trägerscheibenelement, vorzugsweise zwei wenigstens eine Auslenkungsmasse zwischen sich aufnehmende Trägerscheibenelemente, umfasst.

Insbesondere da die eingangs angesprochene radiale Staffelung vorgesehen ist, wird eine Funktionen- bzw. Bauteileverschmelzung dadurch erreicht, dass bei wenigstens einer Feder-Masse-Pendeleinheit und wenigstens einer Fliehkraft-Masse-Pendeleinheit wenigstens ein Trägerscheibenelement ein Deckscheibenelement oder ein Zentralscheibenelement bereitstellt.

Die Drehmomentübertragungsanordnung kann als hydrodynamischer Drehmomentwandler, als Fluidkupplung, als nasslaufende Kupplung sowie als Hybridantriebsmodul, beispielsweise umfassend eine nasslaufende Kupplung, ausgebildet sein.

Die vorliegende Erfindung wird nachfolgend mit Bezug auf die beiliegenden Figuren detailliert beschrieben. Es zeigt:
- Fig. 1: eine in Form eines hydrodynamischen Drehmomentwandlers ausgebildete Drehmomentübertragungsanordnung im Teil-Längsschnitt;
- Fig. 2: eine in Form einer nasslaufenden Kupplung ausgebildete Drehmomentübertragungsanordnung im Teil-Längsschnitt;
- Fig. 3: eine der Fig. 1 entsprechende Darstellung einer alternativen Ausgestaltungsart;
- Fig. 4: eine Teil-Längsschnittansicht einer Kombination einer Fliehkraft-Masse-Pendeleinheit mit einer Feder-Masse-Pendeleinheit.

Die Fig. 1 zeigt in konstruktiver Ausführung einer Drehmomentübertragungsanordnung 10 als hydrodynamischer Drehmomentwandler. Der Eingangsbereich 12 ist im Wesentlichen bereitgestellt durch eine Gehäuseanordnung 44 mit einer antriebsseitig, also einem Antriebsaggregat zugewandt zu positionierenden Gehäuseschale 46, einer abtriebsseitig, also beispielsweise einem Getriebe zugewandt zu positionierenden Gehäuseschale 48. Diese beiden Gehäuseschalen 46, 48 können durch ein weiteres ringartiges Gehäuseteil 50 miteinander verbunden sein, so dass ein vollständig abgekapselter Innenraum 52 der Gehäuseanordnung 44 gebildet ist.

In diesem Innenraum 52 ist ein Turbinenrad 22 angeordnet, das mit seinen Turbinenradschaufeln 56 an der Gehäuseschale 48 vorgesehenen Pumpenradschaufeln 58 axial gegenüberliegt. Mit diesen Pumpenradschaufeln 58 bildet die Gehäuseschale 48 das mit der Gehäuseanordnung 44 bzw. dem Antriebsbereich 12 um eine Drehachse A drehbares Pumpenrad 20. Radial innen liegt zwischen dem Pumpenrad 20 und dem Turbinenrad 22 ein allgemein mit 62 bezeichnetes Leitrad.

Über eine Überbrückungskupplung 64 und eine Torsionsschwingungsdämpferanordnung 14 kann eine Drehmomentübertragungsverbindung zwischen der Gehäuseanordnung 44, also dem Antriebsbereich 12, und einer Abtriebsnabe 66 hergestellt werden, welche im Wesentlichen auch den Abtriebsbereich 16 bereitstellt.

Die Torsionsschwingungsdämpferanordnung 14 umfasst zwei seriell wirksame Torsionsschwingungsdämpfer 68, 70. Der im Drehmomentenfluss unmittelbar auf die Überbrückungskupplung 64 folgende, radial äußere Torsionsschwingungsdämpfer 68 umfasst eine als Zentralscheibenelement ausgebildete erste Primärseite 72 und eine mit zwei miteinander fest verbundenen Deckscheibenelementen ausgebildete erste Sekundärseite 74. Die erste Primärseite 72 bildet gleichermaßen den Eingangsbereich 76 der Torsionsschwingungsdämpferanordnung 14.

In ihrem radial inneren Bereich bilden die beiden Deckscheibenelemente auch die zweite Primärseite 78 des zweiten Torsionsschwingungsdämpfers 70. Dessen zweite Sekundärseite 80 bildet auch den Ausgangsbereich 82 der Torsionsschwingungsdämpferanordnung 14 und ist beispielsweise durch Vernietung an die Abtriebsnabe 66 angebunden.

Die beiden Deckscheibenelemente bzw. die Primärseite 78 und die Sekundärseite 74 stellen bei diesem Aufbau gleichzeitig auch den wesentlichen Teil einer Zwischenmassenanordnung 30 der Torsionsschwingungsdämpferanordnung 14 bereit.

Zwischen der Primärseite 72 und der Sekundärseite 74 des radial äußeren Torsionsschwingungsdämpfers 68 wirkt ein erster Dämpferelementenbereich 26, welcher beispielsweise bereitgestellt ist durch eine Mehrzahl von Schraubendruckfedern, die an jeweiligen Umfangsabstützbereichen der ersten Primärseite 72 und der ersten Sekundärseite 74 abgestützt und zur Ermöglichung einer Relativdrehung komprimierbar sind. Ein zweiter Dämpferelementenbereich 28 wirkt gleichermaßen zwischen der zweiten Primärseite 78 und der zweiten Sekundärseite 80 und kann ebenfalls eine Mehrzahl von Schraubendruckfedern umfassen.

Mit der Zwischenmassenanordnung 30, also den Deckscheibenelementen der Torsionsschwingungsdämpferanordnung 14 sind weiterhin eine Feder-Masse-Pendeleinheit 100 und eine Fliehkraft-Masse-Pendeleinheit 102 zur gemeinsamen Drehung um die Drehachse A gekoppelt. Die Feder-Masse-Pendeleinheit 100 umfasst ein Zentralscheibenelement 104, das direkt oder über ein Kopplungselement 106 drehfest angekoppelt ist. Beidseits des Zentralscheibenelements liegen Deckscheibenelemente 108, 10, die in ihrem Bereich radial außerhalb des Zentralscheibenelements 104 durch Vernietung miteinander und mit einer Zusatzmasse 111 fest verbunden sind. Die Zusatzmasse 111 kann beispielsweise in Form eines Masseringes oder in Form von Segmenten, die gegenüber den Deckscheibenelementen fest sind, ausgebildet sein. Das Turbinenrad 22 ist vermittels eines Kopplungselements 107 an die Abtriebsnabe 66, also den Abtriebsbereich 16, direkt drehfest angekoppelt.

Die Deckscheibenelemente 108, 110 und das Zentralscheibenelement 104 weisen, ähnlich wie dies bei Torsionsschwingungsdämpfern der Fall ist, Umfangsabstützbereiche für die Federn 112 der Federanordnung 114 der Feder-Masse-Pendeleinheit 100 auf. Eine Masseanordnung 116 der Feder-Masse-Pendeleinheit 100 umfasst die beiden Deckscheibenelemente 108, 110 und die damit fest verbundene Zusatzmasse 111 sowie, wie im Folgenden noch beschrieben, die radial außen daran anschließende Fliehkraft-Masse-Pendeleinheit 102. Bei Auftreten von Drehschwingungen kann die Masseanordnung 116 unter Kompression der Federn 112 der Federanordnung 114 eine im Wesentlichen freie Schwingung in Umfangsrichtung ausführen, ohne dabei in irgendeinem der Drehmomentübertragungszustände selbst ein Drehmoment zwischen dem Antriebsbereich und dem Abtriebsbereich übertragen zu müssen, so dass diese Tilgungs- bzw. Dämpfungsfunktionalität der als Festfrequenztilger wirksamen Feder-Masse-Pendeleinheit 100 im Wesentlichen in jedem Drehmomentübertragungszustand nutzbar ist.

In ihrem radial äußeren Bereich bilden die Deckscheibenelemente 108, 110 Trägerscheibenelemente 118, 120 eines Auslenkungsmassenträgers 122 der Fliehkraft-Masse-Pendelanordnung 102. Zwischen den beiden Trägerscheibenelementen 118, 120 liegen beispielsweise in Umfangsrichtung um die Drehachse A aufeinander folgend mehrere Auslenkungsmassen 124.

Im Auslenkungsmassenträger 122 ist in der dargestellten Ausgestaltungsvariante in Zuordnung zu jedem Trägerscheibenelement 118, 120 eine Führungsbahn 126, 128 mit einem radial außen liegenden Scheitelbereich beispielsweise durch eine langlochartige Öffnung bereitgestellt. Die Krümmung dieser Führungsbahn ist größer als der Krümmungsradius im Scheitelbereich, so dass entlang dieser Führungsbahnen 126, 128 geführte Führungselemente 130 bei Auslenkung aus den Scheitelbereichen sich in richtung nach radial innen bewegen. In Zuordnung zu jedem Führungselement 130 kann in den Auslenkungsmassen 124 eine weitere Führungsbahn 132 mit radial innen liegendem Scheitelbereich vorgesehen sein. Bei Schwingungsanregung und dabei Umfangsbeschleunigung der Auslenkungsmassen 124 bezüglich des Auslenkungsmassenträgers 122 werden aufgrund der Zusammenwirkung der Führungselemente 130 mit den verschiedenen Führungsbahnen 126, 128, 132 die Auslenkungsmassen 124 aus ihrer Grund-Relativlage bezüglich des Auslenkungsmassenträgers 122, in welcher sie am weitesten radial außen positioniert sind, ausgelenkt und dabei nach radial innen gezwungen, wodurch sie potentielle Energie aufnehmen. Durch die Ausgestaltung der Führungsbahnen, insbesondere der Krümmungsradien derselben, und selbstverständlich auch durch die Auswahl der Masseverhältnisse bei den Auslenkungsmassen 124 wird es möglich, die Fliehkraft-Masse-Pendeleinheit 102 auf eine Ordnung einer Anregungsfrequenz abzustimmen, wobei mit zunehmender Drehzahl, dementsprechend auch mit zunehmender Anregungsfrequenz, die Abstimmungsordnung der Fliehkraft-Masse-Pendeleinheit 102 näherungsweise beibehalten bleibt.

Man erkennt, dass bei der in Fig. 1 dargestellten Ausgestaltungsform die Fliehkraft-Masse-Pendeleinheit 102 über die Feder-Masse-Pendeleinheit 100 an die drehmomentübertragenden Baugruppen, hier die Zwischenmassenanordnung 30, angekoppelt ist, so dass grundsätzlich die Masse der Fliehkraft-Masse-Pendeleinheit 102 für die Masseanordnung 116 benutzt werden kann. Es ist also nicht nur eine bauteilmäßige Verschmelzung im Bereich der Deckscheibenelemente bzw. Trägerscheibenelemente, sondern auch eine funktionale Verschmelzung der beiden Pendeleinheiten 100, 102 realisiert. Weiter erkennt man, dass diese beiden Pendeleinheiten 100, 102 zueinander radial gestaffelt und axial überlappend bzw. axial ausgerichtet angeordnet sind. Insbesondere liegen die Auslenkungsmassen 124 im Wesentlichen einander axial überlappend mit der Feder-Masse-Pendeleinheit 100 bzw. der Federanordnung 114 derselben, was eine axial sehr kompakte Bauweise mit sich bringt, jedoch eine im Wesentlichen vollständige Ausnutzung des radial zur Verfügung stehenden Bauraums zwischen der Torsionsschwingungsdämpferanordnung und dem Turbinenrad gestattet.

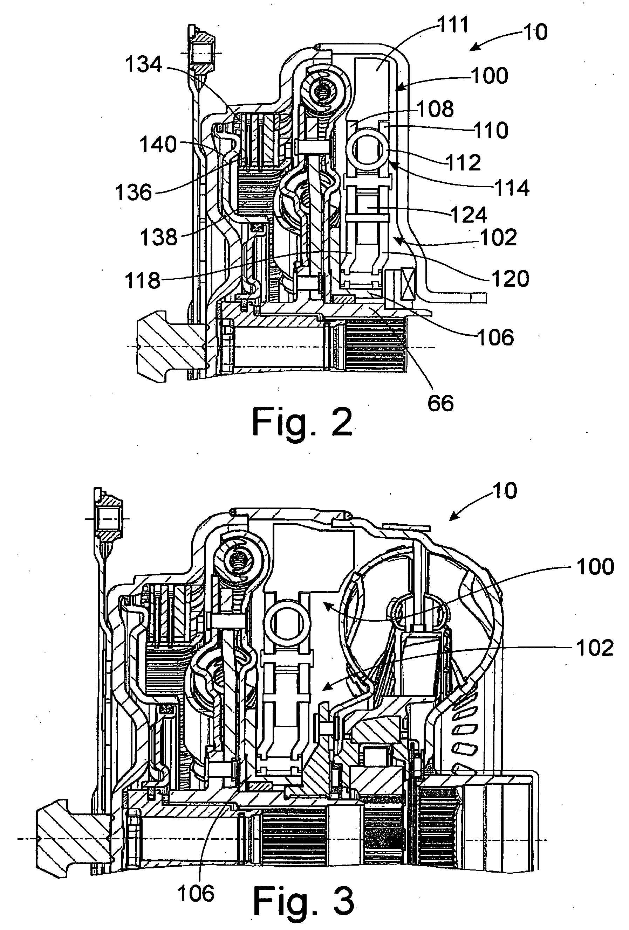

In Fig. 2 ist eine Drehmomentübertragungsanordnung 10 in Form einer nasslaufenden Kupplung realisiert. Diese entspricht im Aufbau wesentlicher Teile, beispielsweise der Überbrückungskupplung und der Torsionsschwingungsdämpferanordnung dem vorangehend mit Bezug auf die Fig. 1 erläuterten Aufbau, so dass auf die diesbezüglichen Ausführungen verwiesen werden kann. Insbesondere erkennt man in Fig. 2 deutlich, dass bei der Überbrückungskupplung zwei Reibflächenformationen 134, 136, jede umfassend mehrere lamellenartige Reibscheiben, vorgesehen sind, wovon die Reibflächenformation 134 mit der Gehäuseschale 46 fest gekoppelt ist, während die Reibflächenformation 136 mit einem an die Primärseite 72 des radial äußeren Torsionsschwingungsdämpfers 68 angebundenen Reibelemententräger 138 fest gekoppelt ist. Ein Kupplungskolben 140 kann durch Druckfluidbeaufschlagung auf die beiden Reibflächenformationen 134, 136 zu bewegt werden und diese in gegenseitigen Reibeingriff pressen, um auf diese Art und Weise ein Drehmoment zwischen der Gehäuseanordnung 12 und der Abtriebsnabe 66 über die Torsionsschwingungsdämpferanordnung 14 zu übertagen. Axial neben der Torsionsschwingungsdämpferanordnung 14 liegen wieder radial gestaffelt die Fliehkraft-Masse-Pendeleinheit 102 und die Feder-Masse-Pendeleinheit 100. Bei der hier gezeigten Ausgestaltungsvariante liegt die Fiehkraft-Masse-Pendeleinheit 102 radial innen und koppelt die Feder-Masse-Pendeleinheit 100 beispielsweise über ein Kopplungselement 106 an die Zwischenmassenanordnung 30 oder alternativ an die Abtriebsnabe und somit den Abtriebsbereich an.

Auch bei dieser Ausgestaltungsform sind zwei Scheibenelemente vorgesehen, die in ihrem radial inneren Bereich die Trägerscheibenelemente 118 und 120 der Fliehkraft-Masse-Pendeleinheit 102 bereitstellen und deren Auslenkungsmassen 124 axial zwischen sich aufnehmen. Radial außen stellen diese Scheibenelemente die Deckscheibenelemente 108, 110 bereit.

Auch bei dieser Ausgestaltungsform liegen die Auslenkungsmassen 124 bzw. die Fliehkraft-Masse-Pendeleinheit 102 axial im Wesentlichen ausgerichtet bzw. einander überlappend zu den Federn 112 der Federanordung 114 bzw. der Feder-Masse-Pendeleinheit 100.

In Fig. 3 ist eine als hydrodynamischer Drehmomentwandler ausgebildete Drehmomentübertragungsanordnung 10 dargestellt, welche in ihrem Aufbau grundsätzlich der mit Bezug auf die Fig. 1 bereits Beschriebenen entspricht. Man erkennt jedoch, dass die Fliehkraft-Masse-Pendeleinheit 102 und die Feder-Masse-Pendeleinheit 100 die in Fig. 2 dargestellte Relativlage zueinander einnehmen, also die Feder-Masse-Pendeleinheit 100 radial außerhalb der Fliehkraft-Masse-Pendeleinheit 102 angeordnet und über diese und beispielsweise ein Kopplungselement 106 an die Zwischenmassenanordnung 30 angekoppelt ist.

Es sei darauf hingewiesen, dass selbstverständlich bei vor allen vorangehend beschriebenen Ausgestaltungsformen die zur Tilgung einer Frequenz bzw. einer Anregungsordnung vorgesehenen Pendeleinheiten 100, 102 beispielsweise über das jeweils vorgesehene Kopplungselement 106 auch an den Abtriebsbereich, also die Abtriebsnabe, angekoppelt sein könnten, ggf. zusammen mit dem Turbinenrad.

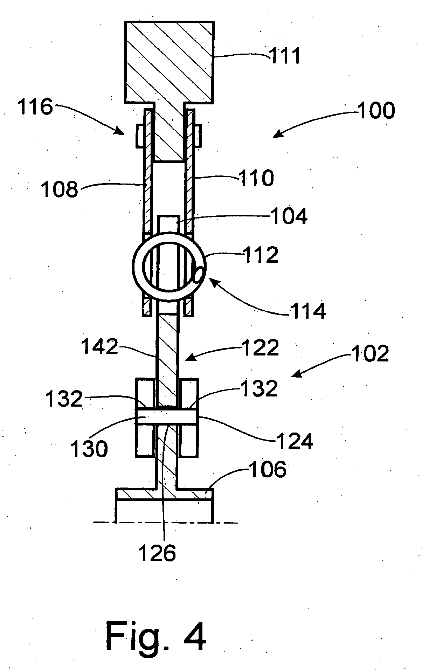

Die Fig. 4 zeigt eine alternative Ausgestaltung einer eine Fliehkraft-Masse-Pendeleinheit 102 und eine Feder-Masse-Pendeleinheit 100 umfassenden Baugruppe. Auch hier ist die Fliehkraft-Masse-Pendeleinheit 102 radial innen liegend angeordnet, so dass die Feder-Masse-Pendeleinheit 100 über diese bzw. ein Kopplungselement 106 an die drehmomentübertragenden Baugruppen, beispielsweise die Abtriebsnabe, angekoppelt werden kann.

Der Auslenkungsmassenträger 122 umfasst hier ein Zentralscheibenelement 142, welches in seinem radial äußeren Bereich gleichermaßen das Zentralscheibenelement 104 der Feder-Masse-Pendeleinheit 100 bereitstellt. Beidseits des Auslenkungsmassenträgers 122 liegen die Auslenkungsmassen 124 mit den darin gebildeten Führungsbahnen 132.

Auch bei dieser Ausführung steht das Zentralscheibenelement 142 über Federn 112 einer Federanordnung 114 in Wirkverbindung mit Deckscheibenelementen 108, 110, die in ihrem Bereich radial außerhalb des Zentralscheibenelements 142 durch Vernietung miteinander und mit einer Zusatzmasse 111 fest verbunden sind. Auch hier kann die Zusatzmasse 111 in Form eines Masseringes oder in Form von Segmenten, die gegenüber den Deckscheibenelementen 108, 110 fest sind, ausgebildet sein.

Es sei hier darauf hingewiesen, dass beispielsweise auch vorgesehen sein kann, dass die beiden einander beidseits des Auslenkungsmassenträgers 122 gegenüberliegenden Auslenkungsmassen 124 zu einer Gesamt-Auslenkungsmasse zusammengefasst sind, beispielsweise durch die damit jeweils dann fest verbundenen Führungselemente 130. In diesem Falle weisen die Auslenkungsmassen selbst keine Führungsbahnen für die Führungselemente auf. Vielmehr sind diese nur entlang Führungsbahnen im Auslenkungsmassenträger 122 bewegbar, beispielsweise durch Durchführung einer Abrollbewegung. In diesem Falle könnten die Auslenkungsmassen ring- bzw. kreisscheibenartig ausgebildet sein, um diese Abrollbewegung zu ermöglichen. Grundsätzlich könnten auf diese Weise Auslenkungsmassen auch über mehrere Führungselemente 130 miteinander gekoppelt sein, wobei in ihrem mit den Führungsbahnen 126 zusammenwirkenden Bereich die Führungselemente 130 dann zum Ermöglichen einer Rollbewegung durch Rollhülsen oder dergleichen umgeben sein könnten.

Auch bei den vorangehend beschriebenen Ausgestaltungsformen könnten die Führungselemente mit den Auslenkungsmassen oder dem Auslenkungsmassenträger fest verbunden sein, wobei dann jeweils nur in der anderen Baugruppe von Auslenkungsmasse und Auslenkungsmassenträger eine Führungsbahn vorgesehen ist, entlang welcher die Führungselemente, ggf. umgeben von einer Rollhülse oder dergleichen, sich bewegen könnten.

Weiter ist es selbstverständlich, dass beispielsweise auch die Feder-Masse-Pendeleinheit 100 nur mit einem Deckscheibenelement ausgebildet sein könnte, das dann seitlich neben dem Zentralscheibenelement positioniert ist, wobei am Zentralscheibenelement und am Deckscheibenelement dann jeweils Abstützbereiche für die Federanordnung vorgesehen sind. Der Feder-Masse-Pendeleinheit kann, wie dargestellt, bei einer sehr stabil und haltbar ausgeführten Variante Schraubendruckfedern umfassen. Selbstverständlich ist es auch möglich, hier andere Federelemente, insbesondere auch Elastomermaterialelemente, einzusetzen, welche unter ihrer Verformung eine Relativbewegung einer Masseanordnung bezüglich eines Trägers zulassen.

Es ist selbstverständlich auch möglich, zum Erweitern des Frequenzspektrums, in welchem bei einer erfindungsgemäß aufgebauten Drehmomentübertragungsanordnung eine Dämpfungswirkung genutzt werden kann, mehr als eine Feder-Masse-Pendeleinheit oder/und mehr als eine Fliehkraft-Masse-Pendeleinheit vorzusehen, beispielsweise zwei der in den verschiedenen Ausführungsformen dargestellten kombinierten Baugruppen nebeneinander anzuordnen. Dabei könnte eine an die Zwischenmassenanordnung und die andere an die Abtriebsnabe, also den Abtriebsbereich angekoppelt sein. Eine derartige differenzierte Ankopplung könnte selbstverständlich auch dann realisiert sein, wenn von jeder Pendeleinheit oder zumindest einer Pendeleinheit nur jeweils eine einzige vorgesehen ist.

Ferner ist es insbesondere bei der Fliehkraft-Masse-Pendeleinheit möglich, an ein und demselben Auslenkungsmassenträger Auslenkungsmassen mit verschiedener Masse vorzusehen, so dass bereits in einer einzigen Fliehkraft-Masse-Pendeleinheit eine Abstimmung auf verschiedene Anregungsordnungen erzielt werden kann.

Durch die Kombination von drehzahladaptiven Tilgern mit Festfrequenztilgern wird bei baulich sehr kompakter Ausgestaltung eine Tilgung von Anregungsfrequenzen in einem vergleichsweise breiten Anregungsspektrum möglich. So ist es insbesondere möglich, den bzw. die Festfrequenztilger, also die Feder-Masse-Pendeleinheit(en) auf Anregungsfrequenzen abzustimmen, die im Bereich bis etwa 1000 Umdrehungen pro Minute auftreten, also einen Drehzahlbereich, in welchem drehzahladaptive Tilger ihre Funktionalität aufgrund nicht ausreichender Fliehkraft noch nicht vollständig entfalten können. Für einen höheren Drehzahlbereich kann dann die Funktionalität des bzw. der drehzahladaptiven Tilger, also Fliehkraft-Masse-Pendeleinheit, genutzt werden, was deshalb besonders vorteilhaft ist, da im Bereich höherer Drehzahlen Festfrequenztilger im Allgemeinen aufgrund der erforderlichen Auslenkungsbegrenzung der Masseanordnung derselben nur eine begrenzte Leistungsfähigkeit aufweisen.

## Patentansprüche

1. Drehmomentübertragungsanordnung für den Antriebsstrang eines Fahrzeugs, umfassend einen mit einem Antriebsorgan, insbesondere Antriebswelle, zur Drehung um eine Drehachse (A) zu koppelnden Antriebsbereich (12), einen über eine Dämpferelementenanordnung (26, 28) mit dem Antriebsbereich (12) gekoppelten oder koppelbaren und im Kopplungszustand gegen die Rückstellwirkung der Dämpferetementenanordnung (26, 28) um die Drehachse (A) bezüglich des Antriebsbereichs (12) drehbaren Abtriebsbereich (16) sowie wenigstens eine Feder-Masse-Pendeleinheit (100) mit einer Federanordnung (114) und einer gegen die Rückstellwirkung der Federanordnung (114) auslenkbaren Masseanordnung (116) und wenigstens eine Fliehkraft-Masse-Pendeleinheit (102) mit einem um die Drehachse (A) drehbaren Auslenkungsmassenträger (122) und wenigstens einer am Auslenkungsmassenträger (122) bezüglich diesem verlagerbar getragene Auslenkungsmasse (124), wobei bei Auslenkung der wenigstens einen Auslenkungsmasse (124) aus einer Grund-Relativlage bezüglich des Auslenkungsmassenträgers (122) eine Radiallage der wenigstens einen Auslenkungsmasse (124) bezüglich der Drehachse (A) sich verändert, wobei wenigstens eine Feder-Masse-Pendeleinheit (100) ein Zentralscheibenelement (104; 142) und an wenigstens einer Seite davon ein Deckscheibenelement (108, 110), vorzugsweise beidseits davon miteinander verbundene Deckscheibenelemente (108, 110) umfasst, wobei das wenigstens eine Deckscheibenelement (108, 110) gegen die Wirkung einer Federanordnung (114) bezüglich des Zentralscheibenelements (104) drehbar ist und wobei die wenigstens eine Feder-Masse-Pendeleinheit (100) an eine Baugruppe von Zentralscheibenelement (104) und Deckscheibenelement (108, 110), vorzugsweise Zentralscheibenelement (104), angekoppelt ist und an einer anderen Baugruppe von Deckscheibenelement (104) und Zentralscheibenelement (108, 110), vorzugsweise Deckscheibenelement (108, 110), wenigstens ein Teil der Masseanordnung (116) gelagert ist, wobei bei wenigstens einer Fliehkraft-Masse-Pendeleinheit (102) der Auslenkungsmassenträger (122) ein Trägerscheibenelement (118, 120) umfasst, **dadurch gekennzeichnet, dass**
bei wenigstens einer Feder-Masse-Pendeleinheit (100) und wenigstens einer Fliehkraft-Masse-Pendeleinheit (102) wenigstens ein Trägerscheibenelement (118, 120) ein Deckscheibenelement (108, 116) oder ein Zentralscheibenelement (104) umfasst, so dass wenigstens eine Auslenkungsmasse (124) einer Fliehkraft-Masse-Pendeleinheit (102) und wenigstens eine Masseanordnung (116) oder/und wenigstens eine Federanordnung (114) einer Feder-Masse-Pendeleinheit (100) bezüglich einander radial gestaffelt und sich axial wenigstens teilweise überlappend angeordnet sind.

2. Drehmomentübertragungsanordnung nach Anspruch 1, **dadurch gekennzeichnet, dass** wenigstens eine Feder-Masse-Pendeleinheit (100) oder/und wenigstens eine Fliehkraft-Masse-Pendeleinheit (102) an den Abtriebsbereich (16) angekoppelt ist.

3. Drehmomentübertragungsanordnung nach Anspruch 1 oder 2, **dadurch gekennzeichnet, dass** mehrere, vorzugsweise alle Feder-Masse-Pendeleinheiten (100) oder/und Fliehkraft-Masse-Pendeleinheiten (102) an den Abtriebsbereich (16) angekoppelt sind.

4. Drehmomentübertragungsanordnung nach einem der Ansprüche 1 bis 3, **dadurch gekennzeichnet, dass** die Dämpferelementenanordnung (26, 28) einen ersten Dämpferelementenbereich (26), einen zweiten Dämpferelementenbereich (28) und dazwischen eine Zwischenmassenanordnung (30) umfasst.

5. Drehmomentübertragungsanordnung nach Anspruch 4, **dadurch gekennzeichnet, dass** wenigstens eine Feder-Masse-Pendeleinheit (100) oder/und wenigstens eine Fliehkraft-Masse-Pendeleinheit (102) an die Zwischenmassenanordnung (30) angekoppelt ist.

6. Drehmomentübertragungsanordnung nach Anspruch 4 oder 5, **dadurch gekennzeichnet, dass** mehrere, vorzugsweise alle Feder-Masse-Pendeleinheiten (100) oder/und Fliehkraft-Masse-Pendeleinheiten (102) an die Zwischenmassenanordnung (30) angekoppelt sind.

7. Drehmomentübertragungsanordnung nach einem der Ansprüche 1 bis 6, **dadurch gekennzeichnet, dass** wenigstens eine Feder-Masse-Pendeleinheit (100) oder/und wenigstens eine Fliehkraft-Masse-Pendeleinheit (102) an wenigstens eine andere Feder-Masse-Pendeleinheit (100) oder/und wenigstens eine andere Fliehkraft-Masse-Pendeleinheit (102) angekoppelt ist.

8. Drehmomentübertragungsanordnung nach einem der Ansprüche 1 bis 7, **dadurch gekennzeichnet, dass** der Antriebsbereich (12) eine mit Fluid gefüllte oder füllbare Gehäuseanordnung (44) umfasst.

9. Drehmomentübertragungsanordnung nach Anspruch 8, **dadurch gekennzeichnet, dass** mit der Gehäuseanordnung (44) ein Pumpenrad (20) um die Drehachse (A) drehbar ist und in der Gehäuseanordnung (44) ein Turbinenrad (22) angeordnet ist.

10. Drehmomentübertragungsanordnung nach Anspruch 9, **dadurch gekennzeichnet, dass** das Turbinenrad (22) wenigstens einen Teil einer Masseanordnung (116) einer Feder-Masse-Pendeleinheit (100) bildet.

11. Drehmomentübertragungsanordnung nach Anspruch 9 oder 10, **dadurch gekennzeichnet, dass** das Turbinenrad (22) an den Abtriebsbereich (16) angekoppelt ist.

12. Drehmomentübertragungsanordnung nach Anspruch 4 und nach einem der Ansprüche 9 oder 10, **dadurch gekennzeichnet, dass** das Turbinenrad (22) an die Zwischenmassenanordnung (30) angekoppelt ist.

13. Drehmomentübertragungsanordnung nach einem der Ansprüche 1 bis 12, **dadurch gekennzeichnet, dass** im Drehmomentenfluss zwischen dem Antriebsbereich (12) und dem Abtriebsbereich (16) eine Torsionsschwingungsdämpferanordnung (14) mit einem Eingangsbereich (76), einem Ausgangsbereich und der dazwischen wirkenden Dämpferelementenanordnung (26, 28) vorgesehen ist.

14. Drehmomentübertragungsanordnung nach Anspruch 4 und Anspruch 13, **dadurch gekennzeichnet, dass** die Torsionsschwingungsdämpferanordnung einen ersten Torsionsschwingungsdämpfer (68) mit einer den Eingangsbereich (76) bereitstellenden ersten Primärseite (72) und einer gegen die Wirkung des ersten Dämpferelementenbereichs (26) bezüglich der ersten Primärseite (72) drehbaren ersten Sekundärseite (74) sowie einen zweiten Torsionsschwingungsdämpfer (70) mit einer zweiten Primärseite (78) und einer gegen die Wirkung des zweiten Dämpferelementenbereichs (28) bezüglich der zweiten Primärseite (78) drehbaren und den Ausgangsbereich (82) bereitstellenden zweiten Sekundärseite (80) umfasst, wobei die erste Sekundärseite (74) und die zweite Primärseite (78) wenigstens einen Teil der Zwischenmassenanordnung (30) bereitstellen.

15. Drehmomentübertragungsanordnung nach einem der Ansprüche 1 bis 14, **dadurch gekennzeichnet, dass** bei wenigstens einer Fliehkraft-Masse-Pendeleinheit (102) an wenigstens einer Auslenkungsmasse (124) oder/und dem Auslenkungsmassenträger (122) in Zuordnung zu wenigstens einer Auslenkungsmasse (124) wenigstens eine gekrümmte Führungsbahn (126, 128, 132) mit einem Scheitelbereich vorgesehen ist, wobei bei Auslenkung der wenigstens einen Auslenkungsmasse (24) aus der Grund-Relativlage ein Führungselement (130) sich ausgehend vom Scheitelbereich entlang der Führungsbahn (126, 128, 132) bewegt.

16. Drehmomentübertragungsanordnung nach einem der Ansprüche 1 bis 15, **dadurch gekennzeichnet, dass** bei wenigstens einer Fliehkraft-Masse-Pendeleinheit (102) der Auslenkungsmassenträger (122) zwei Trägerscheibenelemente (118, 120) umfasst, die wenigstens eine Auslenkungsmasse (124) zwischen sich aufnehmen.

17. Drehmomentübertragungsanordnung nach einem der Ansprüche 1 bis 16, **dadurch gekennzeichnet, dass** die Deckscheibenelemente (108, 110) zur Bildung der Masseanordnung (116) in ihrem Bereich radial außerhalb des Zentralscheibenelements (104, 142) durch Vernietung miteinander und mit einer Zusatzmasse (111) fest verbunden sind.

18. Drehmomentübertragungsanordnung nach Anspruch 17, **dadurch gekennzeichnet, dass** die Zusatzmasse (111) in Form eines Masseringes oder in Form von Segmenten, die gegenüber den Deckscheibenelementen (108, 110) fest sind, ausgebildet ist.

19. Drehmomentübertragungsanordnung nach einem der Ansprüche 1 bis 16, **dadurch gekennzeichnet, dass** sie ausgebildet ist als:
- hydrodynamischer Drehmomentwandler,
- Fluidkupplung,
- nasslaufende Kupplung,
- Hybridantriebsmodul.

## Claims

1. Torque transmission arrangement for the drive train of a vehicle, comprising a drive region (12) which is to be coupled to a drive element, in particular driveshaft, for rotation about a rotating axis (A), an output region (16) which is coupled or can be coupled to the drive region (12) by a damper element arrangement (26, 28) and in the coupling state can be rotated about the rotational axis (A) with respect to the drive region (12) counter to the restoring effect of the damper element arrangement (26, 28), and at least one spring-mass pendulum unit (100) with a spring arrangement (114) and a mass arrangement (116) which can be deflected counter to the restoring effect of the spring arrangement (114), and at least one centrifugal-force mass pendulum unit (102) with a deflection mass carrier (122) which can be rotated about the rotational axis (A), and with at least one deflection mass (124) which is supported on the deflection mass carrier (122) so as to be displaceable with respect thereto, wherein when the at least one deflection mass (124) is deflected from a basic relative position with respect to the deflection mass carrier (122) a radial position of the at least one deflection mass (124) with respect to the rotational axis (A) changes, wherein at least one spring-mass pendulum unit (100) comprises a central disc element (104; 142), and on at least one side thereof, a cover disc element (108, 110), preferably cover disc elements (108, 110) which are connected to one another on both sides of said central disc element (104; 142), wherein the at least one cover disc element (108, 110) can be rotated with respect to the central disc element (104) counter to the effect of a spring arrangement (114), and wherein the at least one spring-mass pendulum unit (100) is coupled to an assembly of the central disc element (104) and cover disc element (108, 110), preferably central disc element (104), and at least part of the mass arrangement (116) is supported on another assembly of the cover disc element (104) and the central disc element (108, 110), preferably cover disc element (108, 110), wherein in the case of at least one centrifugal-force mass pendulum unit (102) the deflection mass carrier (122) comprises a carrier disc element (118, 120), **characterized in that**
in the case of at least one spring-mass pendulum unit (100) and at least one centrifugal-force mass pendulum unit (102) at least one carrier disc element (118, 120) comprises a cover disc element (108, 116) or a central disc element (104), with the result that at least one deflection mass (124) of a centrifugal-force mass pendulum unit (102) and at least one mass arrangement (116) and/or at least one spring arrangement (114) of a spring-mass pendulum unit (100) are stacked radially with respect to one another and are arranged at least partially overlapping axially.

2. Torque transmission arrangement according to Claim 1, **characterized in that** at least one spring-mass pendulum unit (100) and/or at least one centrifugal-force mass pendulum unit (102) are coupled to the output region (16).

3. Torque transmission arrangement according to Claim 1 or 2, **characterized in that** a plurality of the spring-mass pendulum units (100) and/or centrifugalforce mass pendulum units (102), preferably all of said units, are coupled to the output region (16).

4. Torque transmission arrangement according to one of Claims 1 to 3, **characterized in that** the damper element arrangement (26, 28) comprises a first damper element region (26), a second damper element region (28) and an intermediate mass arrangement (30) between them.

5. Torque transmission arrangement according to Claim 4, **characterized in that** at least one spring-mass pendulum unit (100) and/or at least one centrifugal-force mass pendulum unit (102) is coupled to the intermediate mass arrangement (30).

6. Torque transmission arrangement according to Claim 4 or 5, **characterized in that** a plurality of the spring-mass pendulum units (100) and/or centrifugal-force mass pendulum units (102), preferably all of said units, are coupled to the intermediate mass arrangement (30).

7. Torque transmission arrangement according to one of Claims 1 to 6, **characterized in that** at least one spring-mass pendulum unit (100) and/or at least one centrifugal-force mass pendulum unit (102) is coupled to at least one other spring-mass pendulum unit (100) and/or at least one other centrifugal-force mass pendulum unit (102).

8. Torque transmission arrangement according to one of Claims 1 to 7, **characterized in that** the drive region (12) comprises a housing arrangement (44) which is or can be filled with fluid.

9. Torque transmission arrangement according to Claim 8, **characterized in that** a pump wheel (20) can be rotated about the rotational axis (A) with the housing arrangement (44), and a turbine wheel (22) is arranged in the housing arrangement (44).

10. Torque transmission arrangement according to Claim 9, **characterized in that** the turbine wheel (22) forms at least part of a mass arrangement (116) of a spring-mass pendulum unit (100).

11. Torque transmission arrangement according to Claim 9 or 10, **characterized in that** the turbine wheel (22) is coupled to the output region (16).

12. Torque transmission arrangement according to Claim 4 and according to one of Claim 9 or 10, **characterized in that** the turbine wheel (22) is coupled to the intermediate mass arrangement (30).

13. Torque transmission arrangement according to one of Claims 1 to 12, **characterized in that** a torsional vibrational damper arrangement (14) with an input region (76), an output region and the damper element arrangement (26, 28) arranged between them is provided in the torque flow between the drive region (12) and the output region (16).

14. Torque transmission arrangement according to Claim 4 and Claim 13, **characterized in that** the torsional vibrational damper arrangement comprises a first torsional vibrational damper (68) with a first primary side (72) which makes available the input region (76), and a first secondary side (74) which can be rotated with respect to the first primary side (72) counter to the effect of the first damper element region (26), and a second torsional vibrational damper (70) with a second primary side (78) and a second secondary side (80) which can be rotated with respect to the second primary side (78) counter to the effect of the second damper element region (28) and which makes available the output region (82), wherein the first secondary side (74) and the second primary side (78) make available at least part of the intermediate mass arrangement (30).

15. Torque transmission arrangement according to one of Claims 1 to 14, **characterized in that** in the case of at least one centrifugal-force mass pendulum unit (102) at least one curved guide path (126, 128, 132) with an apex region is provided on at least one deflection mass (124) and/or the deflection mass carrier (122) in assignment to at least one deflection mass (124), wherein when the at least one deflection mass (124) is deflected out of the basic relative position a guide element (130) moves along the guide path (126, 128, 132) starting from the apex region.

16. Torque transmission arrangement according to one of Claims 1 to 15, **characterized in that** in the case of at least one centrifugal-force mass pendulum unit (102) the deflection mass carrier (122) comprises two carrier disc elements (118, 120) which hold at least one deflection mass (124) between them.

17. Torque transmission arrangement according to one of Claims 1 to 16, **characterized in that** the cover disc elements (108, 110) are fixedly connected to one another and to an additional mass (111) in their region which is radially outside the central disc element (104, 142) in order to form the mass arrangement (116).

18. Torque transmission arrangement according to Claim 17, **characterized in that** the additional mass (111) is embodied in the form of a mass ring or in the form of segments which are fixed with respect to the cover disc elements (108, 110).

19. Torque transmission arrangement according to one of Claims 1 to 16, **characterized in that** it is embodied as:
- a hydrodynamic torque converter,
- a fluid clutch,
- a wet-running clutch, or
- a hybrid drive module.

## Revendications

1. Ensemble de transmission de couple de rotation pour la chaîne cinématique d'un véhicule, comprenant une zone d'entraînement (12) à coupler avec un organe d'entraînement, en particulier un arbre d'entraînement, pour la rotation autour d'un axe de rotation (A), une zone de sortie (16) qui est ou peut être couplée à la zone d'entraînement (12) par un ensemble d'éléments d'amortisseur (26, 28) et qui à l'état couplé peut tourner par rapport à la zone d'entraînement (12) autour de l'axe de rotation (A) contre l'action de rappel de l'ensemble d'éléments d'amortisseur (26, 28), ainsi qu'au moins une unité oscillante à ressort-masse (100) avec un ensemble de ressort (114) et un ensemble de masse (116) déplaçable contre l'action de rappel de l'ensemble de ressort (114) et au moins une unité oscillante à force centrifuge-masse (102) avec un support de masse de déplacement (122) pouvant tourner autour de l'axe de rotation (A) et au moins une masse de déplacement (124) portée sur le support de masse de déplacement (122) de façon déplaçable par rapport à celui-ci, dans lequel, lors d'un déplacement de ladite au moins une masse de déplacement (124) hors d'une position relative de base par rapport au support de masse de déplacement (122), une position radiale de ladite au moins une masse de déplacement (124) par rapport à l'axe de rotation (A) se modifie, dans lequel au moins une unité oscillante à ressort-masse (100) comprend un élément de disque central (104; 142) et sur au moins un côté de celui-ci un élément de disque de couvercle (108, 110), de préférence des éléments de disque de couvercle (108, 110) reliés l'un à l'autre de part et d'autre de celui-ci, dans lequel ledit au moins un élément de disque de couvercle (108, 110) peut tourner par rapport à l'élément de disque central (104) contre l'action d'un ensemble de ressort (114) et dans lequel ladite au moins une unité oscillante à ressort-masse (100) est couplée à un groupe composé de l'élément de disque central (104) et de l'élément de disque de couvercle (108, 110), de préférence à l'élément de disque central (104) et au moins une partie de l'ensemble de masse (116) est montée sur un autre groupe composé de l'élément de disque de couvercle (104) et de l'élément de disque central (108, 110), de préférence sur l'élément de disque de couvercle (108, 110), dans lequel, avec au moins une unité oscillante à force centrifuge-masse (102), le support de masse de déplacement (122) comprend un élément de disque de support (118, 120),
**caractérisé en ce que**, avec au moins une unité oscillante à ressort-masse (100) et au moins une unité oscillante à force centrifuge-masse (102), au moins un élément de disque de support (118, 120) comprend un élément de disque de couvercle (108, 116) ou un élément de disque central (104), de telle manière qu'au moins une masse de déplacement (124) d'une unité oscillante à force centrifuge-masse (102) et au moins un ensemble de masse (116) et/ou au moins un ensemble de ressort (114) d'une unité oscillante à ressort-masse (100) soient étagés radialement l'un par rapport à l'autre et soient disposés axialement avec un chevauchement au moins partiel.

2. Ensemble de transmission de couple de rotation selon la revendication 1, **caractérisé en ce qu'**au moins une unité oscillante à ressort-masse (100) et/ou au moins une unité oscillante à force centrifuge-masse (102) est couplée à la zone de sortie (16).

3. Ensemble de transmission de couple de rotation selon la revendication 1 ou 2, **caractérisé en ce que** plusieurs, de préférence toutes les unités oscillantes à ressort-masse (100) et/ou les unités oscillantes à force centrifuge-masse (102) sont couplées à la zone de sortie (16).

4. Ensemble de transmission de couple de rotation selon l'une quelconque des revendications 1 à 3, **caractérisé en ce que** l'ensemble d'éléments d'amortisseur (26, 28) comprend une première zone d'éléments d'amortisseur (26), une deuxième zone d'éléments d'amortisseur (28) et entre celles-ci un ensemble de masse intermédiaire (30).

5. Ensemble de transmission de couple de rotation selon la revendication 4, **caractérisé en ce qu'**au moins une unité oscillante à ressort-masse (100) et/ou au moins une unité oscillante à force centrifuge-masse (102) est couplée à l'ensemble de masse intermédiaire (30).

6. Ensemble de transmission de couple de rotation selon la revendication 4 ou 5, **caractérisé en ce que** plusieurs, de préférence toutes les unités oscillantes à ressort-masse (100) et/ou les unités oscillantes à force centrifuge-masse (102) sont couplées à l'ensemble de masse intermédiaire (30).

7. Ensemble de transmission de couple de rotation selon l'une quelconque des revendications 1 à 6, **caractérisé en ce qu'**au moins une unité oscillante ressort-masse (100) et/ou au moins une unité oscillante à force centrifuge-masse (102) est couplée à une autre unité oscillante à ressort-masse (100) et/ou à au moins une autre unité oscillante à force centrifuge-masse (102).

8. Ensemble de transmission de couple de rotation selon l'une quelconque des revendications 1 à 7, **caractérisé en ce que** la zone d'entraînement (12) comprend un ensemble de boîtier (44) qui est ou peut être rempli de fluide.

9. Ensemble de transmission de couple de rotation selon la revendication 8, **caractérisé en ce qu'**une roue de pompe (20) peut tourner autour de l'axe de rotation (A) avec l'ensemble de boîtier (44) et une roue de turbine (22) est disposée dans l'ensemble de boîtier (44).

10. Ensemble de transmission de couple de rotation selon la revendication 9, **caractérisé en ce que** la roue de turbine (22) forme au moins une partie de l'ensemble de masse (116) d'une unité oscillante à ressort-masse (100).

11. Ensemble de transmission de couple de rotation selon la revendication 9 ou 10, **caractérisé en ce que** la roue de turbine (22) est couplée à la zone de sortie (16).

12. Ensemble de transmission de couple de rotation selon la revendication 4 et selon l'une des revendications 9 ou 10, **caractérisé en ce que** la roue de turbine (22) est couplée à l'ensemble de masse intermédiaire (30).

13. Ensemble de transmission de couple de rotation selon l'une quelconque des revendications 1 à 12, **caractérisé en ce qu'**il est prévu, dans le flux de couple entre la zone d'entraînement (12) et la zone de sortie (16), un ensemble d'amortisseur de vibrations de torsion (14) avec une zone d'entrée (76), une zone de sortie et l'ensemble d'éléments d'amortisseur (26, 28) agissant entre celles-ci.

14. Ensemble de transmission de couple de rotation selon la revendication 4 et la revendication 13, **caractérisé en ce que** l'ensemble d'amortisseur de vibrations de torsion comprend un premier amortisseur de vibrations de torsion (68) avec un premier côté primaire (72) procurant une zone d'entrée (76) et un premier côté secondaire (74) pouvant tourner par rapport au premier côté primaire (72) contre l'action de la première zone d'éléments d'amortisseur (26) ainsi qu'un deuxième amortisseur de vibrations de torsion (70) avec un deuxième côté primaire (78) et un deuxième côté secondaire (80) pouvant tourner par rapport au deuxième côté primaire (78) et procurant la zone de sortie (82), dans lequel le premier côté secondaire (74) et le deuxième côté primaire (78) procurent au moins une partie de l'ensemble de masse intermédiaire (30).

15. Ensemble de transmission de couple de rotation selon l'une quelconque des revendications 1 à 14, **caractérisé en ce que**, avec au moins une unité oscillante à force centrifuge-masse (102), il est prévu, à au moins une masse de déplacement (124) et/ou au support de masse de déplacement (122) en association avec au moins une masse de déplacement (124), au moins une voie de guidage incurvée (126, 128, 132) avec une zone de sommet, dans lequel, lors d'un déplacement de ladite au moins une masse de déplacement (24) hors de la position relative de base, un élément de guidage (130) se déplace à partir de la zone de sommet le long de la voie de guidage (126, 128, 132).

16. Ensemble de transmission de couple de rotation selon l'une quelconque des revendications 1 à 15, **caractérisé en ce que**, avec au moins une unité oscillante à force centrifuge-masse (102), le support de masse de déplacement (122) comprend deux éléments de disque de support (118, 120), qui comprennent entre eux au moins une masse de déplacement (124).

17. Ensemble de transmission de couple de rotation selon l'une quelconque des revendications 1 à 16, **caractérisé en ce que** les éléments de disque de couvercle (108, 110) sont assemblés de façon fixe l'un à l'autre par rivetage dans leur région radialement à l'extérieur de l'élément de disque central (104, 142) et à une masse additionnelle (111), pour la formation de l'ensemble de masse (116).

18. Ensemble de transmission de couple de rotation selon la revendication 17, **caractérisé en ce que** la masse additionnelle (111) est réalisée sous la forme d'un anneau de masse ou sous la forme de segments, qui sont fixes par rapport aux éléments de disque de couvercle (108, 110).

19. Ensemble de transmission de couple de rotation selon l'une quelconque des revendications 1 à 16, **caractérisé en ce qu'**il est configuré comme:
- convertisseur de couple hydrodynamique,
- embrayage à fluide,
- embrayage humide,
- module d'entraînement hybride.
